# EUROPEAN PATENT APPLICATION

(11) **EP 2 581 769 A2**
(43) Date of publication of application: **17.04.2013**
(21) Application number: 12186715.4
(22) Date of filing: 28.09.2012
(51) Int. Cl.: G02B 6/00, G02F 1/1333

(54) **Multi-sheet for back light unit and method thereof**

(30) Priority: 12.10.2011 KR 20110104024
(71) Applicant: Glotec Co., Ltd., Chungbuk 365-824 (KR)
(72) Inventor: Sung, Gi Suk, Gyeonggi-do, 463-030 (KR); Kim, Kyu Dong, Incheon, 403-102 (KR); Lee, Hyun Suk, Gangwon-do, 200-170 (KR)
(74) Representative: Chaillot, Geneviève

(57) **Abstract**

This invention relates to a composite sheet for a backlight unit using a printless light guide plate (100) in a liquid crystal display television, which includes a first prism sheet (110,120) positioned directly on the printless light guide plate (100), a second prism sheet (140,150) having a prism pattern formed in a direction orthogonal to a direction of a prism pattern of the first prism sheet, and a protective sheet, wherein ribs of the first prism sheet are adhered to the lower surface of the second prism sheet, and ribs of the second prism sheet are adhered to the lower surface of the protective sheet. A method of manufacturing the composite sheet for a backlight unit is also provided.

## Description

### Technical Field

The present invention relates to a three-layer composite sheet for a backlight unit for use in a liquid crystal display (LCD) and a method of manufacturing the same. More particularly the present invention relates to a two-layer or three-layer composite prism sheet for a backlight unit for LCD such as a thin-film transistor (TFT)-LCD, which is used as a display part of a notebook computer, etc., and to a method of manufacturing the same, and specifically to a two-layer or three-layer composite optical sheet suitable for use in a printless light guide plate of an edge-lighting backlight unit of the LCD and a method of manufacturing the same.

### Background Art

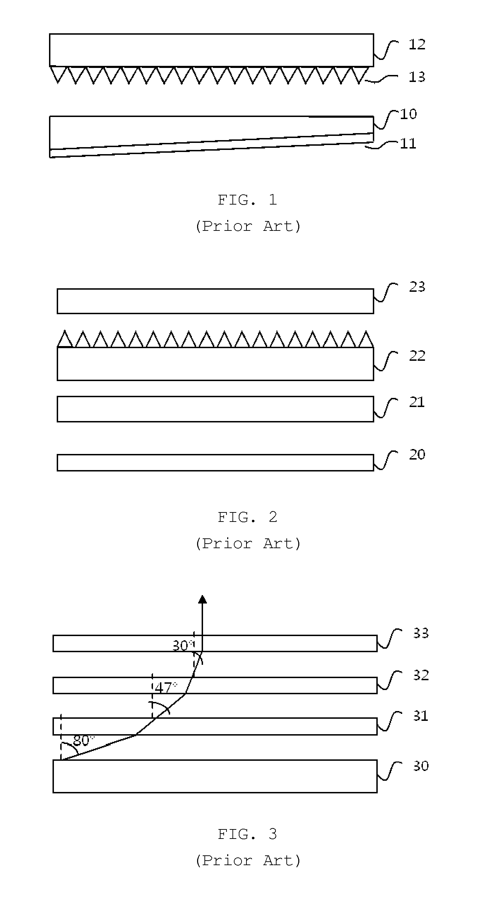

The light guide plates that can be used in the edge-lighting backlight units of LCDs usually fall into the two categories of a prism light guide plate, which uses only light refraction, and a printless light guide plate, which uses the scattering and condensation of light. FIG. 1 schematically illustrates a backlight unit using the prism light guide plate. As illustrated in FIG. 1, the backlight unit comprises a prism light guide plate 11 having a prism pattern 10 formed on the bottom surface thereof, and a reverse prism sheet 13 disposed on the prism light guide plate 11 and having a prism pattern 12 formed on the bottom surface thereof. Although a configuration comprising the prism light guide plate on which has been placed a single optical sheet may be achieved using the prism light guide plate illustrated in FIG. 1, the viewing angle is too narrow and it is difficult to manufacture the prism light guide plate, and it is not used more but rather less. FIG. 2 schematically illustrates a backlight unit using the printless light guide plate. As illustrated in FIG. 2, this unit comprises a printless light guide plate 20, a diffusion sheet 21 bonded to the upper surface of the printless light guide plate 20, a prism sheet 22 bonded to the upper surface of the diffusion sheet 21 and having a prism pattern formed in a vertical direction thereon, a prism sheet 23 bonded to the upper surface of the prism sheet 22 and having a prism pattern formed in a horizontal direction thereon, and a protective sheet 24 bonded to the upper surface of the prism sheet 23. Also, the backlight unit using the printless light guide plate may be configured without the protective sheet 24. In the case of the printless light guide plate using the scattering and condensation of light, which is easier to manufacture than the prism light guide plate, there is provided an optical sheet comprising a combination of three or four sheets of a diffusion sheet 21/a prism sheet (vertical) 22/ a prism sheet (horizontal) 23 or a diffusion sheet 21/a prism sheet (vertical) 22/a prism sheet (horizontal) 23/a protective sheet 24 as illustrated in FIG. 2. Alternatively, the sequence of the prism sheet (horizontal) 23/the prism sheet (vertical) 22 is also possible.

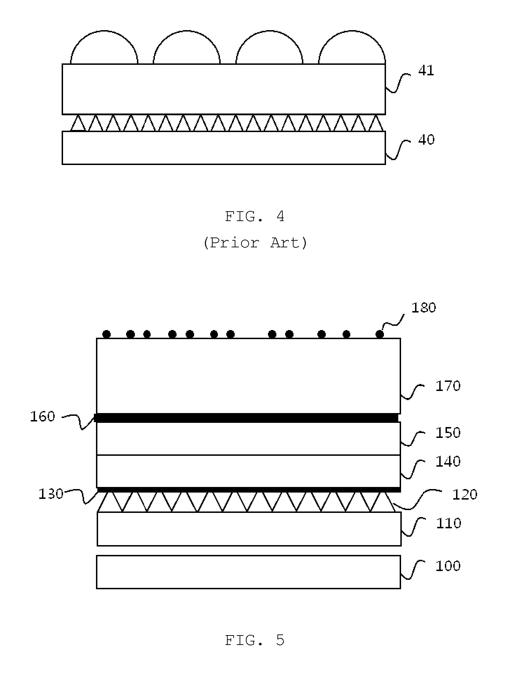

FIG. 3 illustrates the direction of travel of light caused by the backlight unit using two sheets, an upper and a lower prism sheet. As illustrated in FIG. 3, the diffusion sheet 31 functions to screen the pattern of the light guide plate 30 which scatters light and also enables the obliquely directed light emitted from the light guide plate 30 to travel to some extent in the perpendicular direction. The prism sheet 32 functions to condense the light, which has traveled to some extent in the perpendicular direction by means of the diffusion sheet 31, so that the light is sent in the perpendicular direction. As illustrated in FIG. 3, the backlight unit for notebook PCs condenses light in the completely perpendicular direction using two sheets comprising the lower vertical prism sheet 32 and the upper horizontal prism sheet 33. However, the backlight unit for LCD-TVs uses a single horizontal prism sheet because the use of two prism sheets may increase luminance but decrease the viewing angle from both sides. The prism sheet is problematic because prism-shaped mountains are exposed on the surface and may thus easily generate scratches upon handling or after assembly. To solve this problem or improve the viewing angle, a protective sheet may be disposed on the prism sheet. Furthermore, as illustrated in FIG. 4, the composite sheet for a backlight unit is exemplified by a two-layer composite sheet comprising a prism sheet 40 and a lens sheet 41 attached thereon.

However, as is apparent from the performance results shown in the table at the end of the present description, the two-layer composite sheet has low luminance which is insufficient for substituting a diffusion sheet/a prism sheet (vertical)/a prism sheet (horizontal)/a protective sheet, and may merely substitute for two lens sheets. The reason why the conventional two-layer composite sheet has low luminance is that although the lower prism sheet enables the obliquely directed light to travel to some extent upwards as in the diffusion sheet, the ability of the upper lens sheet to condense light is lower than that of the prism sheet. With the goal of increasing luminance using the two-layer composite sheet, the two sheets of the prism sheet and the lens sheet are configured such that the lens sheet is positioned on the diffusion sheet so as to maximally exhibit the light condensing function of these two sheets. In all these cases, however, a total of three sheets including the two-layer composite sheet have to be used.

As mentioned above, the case where the printless light guide plate is used in LCDs, in particular, LCD-TVs requires a plurality of optical sheets, undesirably making it impossible to achieve slimness, decreasing assembly productivity and increasing the cost of the backlight unit.

There is thus a need for a composite optical sheet which makes the LCD-TVs that use a printless light guide plate slim and may increase assembly productivity.

### Disclosure

### Technical Problem

Accordingly, the present invention has been made keeping in mind the above problems occurring in the related art, and an object of the present invention is to provide a two-layer or three-layer composite sheet, suitable for use as an optical sheet for a backlight unit for LCD-TVs, which may achieve slimness despite using a printless light guide plate and may increase assembly productivity, and also to provide a method of manufacturing the same.

### Technical Solution

In order to accomplish the above object, a first aspect of the present invention provides a composite sheet for a backlight unit using a printless light guide plate in LCD-TVs, comprising a first base layer comprising a first polyethyleneterephthalate (PET) film which is positioned directly on the printless light guide plate, a first functional layer having a first prism pattern formed on an upper surface of the first base layer, a second base layer comprising a second PET film, a second functional layer having a second prism pattern formed in a direction orthogonal to a direction of the first prism pattern of the first functional layer on an upper surface of the second base layer, a first adhesive layer formed on a lower surface of the second base layer, a third base layer comprising a third PET film, a third functional layer having a micro-lens formed on an upper surface of the third base layer or having scattering beads distributed on the upper surface of the third base layer, and a second adhesive layer formed on a lower surface of the third base layer, wherein ribs of the first prism pattern of the first functional layer are partially embedded in the first adhesive layer to integrate the layers with each other, and ribs of the second prism pattern of the second functional layer are partially embedded in the second adhesive layer to integrate the layers with each other.

Also a second aspect of the present invention provides a method of manufacturing the composite sheet, comprising forming a first prism pattern using a UV resin on a first PET film and curing it using UV light, thus manufacturing a first prism sheet, thinly applying a UV resin on a lower surface of a second PET film, thus forming a first adhesive layer, partially embedding ribs of the prism pattern of the first prism sheet in the first adhesive layer and performing curing using UV light, thus manufacturing a first flat panel prism sheet, forming a second prism pattern in a direction orthogonal to a direction of the first prism pattern using a UV resin on an upper surface of the first flat panel prism sheet and curing it using UV light, thus manufacturing a second prism sheet, thinly applying a UV resin on a lower surface of a third PET film, thus forming a second adhesive layer, partially embedding ribs of the second prism pattern in the second adhesive layer and performing curing using UV light, thus manufacturing a second flat panel prism sheet, and forming a micro-lens pattern using a UV resin on an upper surface of the second flat panel prism sheet or distributing scattering beads and performing curing using UV light, thus making a lens sheet or a diffusion sheet.

### Advantageous Effects

According to the present invention, there can be manufactured an optical sheet for a backlight unit for LCD-TVs, in particular, a two-layer or three-layer composite sheet which can achieve slimness despite using a printless light guide plate and increase assembly productivity.

### Description of Drawings

FIG. 1 is a schematic view illustrating a conventional backlight unit using a prism light guide plate;
FIG. 2 is a schematic view illustrating a conventional backlight unit using a printless light guide plate;
FIG. 3 is a schematic view illustrating the direction of travel of light caused by the backlight unit;
FIG. 4 is a schematic view illustrating a two-layer composite sheet for a conventional backlight unit;
FIG. 5 is a schematic view illustrating a composite sheet for a backlight unit according to an embodiment of the present invention; and
FIG. 6 is a flowchart illustrating a process of manufacturing the composite sheet for a backlight unit according to an embodiment of the present invention.

### <Description of the Reference Numerals in the Drawings>

100: printless light guide plate
110: first base layer
120: first functional layer
130: first adhesive layer
140: second base layer
150: second functional layer
160: second adhesive layer
170: third base layer
180: third functional layer

### Mode for Invention

Hereinafter, embodiments of the present invention will be more clearly understood with reference to the appended drawings.

FIG. 5 schematically illustrates a composite sheet for a backlight unit according to an embodiment of the present invention. As illustrated in FIG. 1, the composite sheet for a backlight unit according to the present invention, in particular, the composite sheet for a backlight unit using a printless light guide plate 100 in LCD-TVs, comprises a first base layer 110 comprising a first PET film which is positioned directly on the printless light guide plate 100, a first functional layer 120 having a first prism pattern formed on the upper surface of the first base layer 110, a second base layer 140 comprising a second PET film, a second functional layer 150 having a second prism pattern formed in a direction orthogonal to the first prism pattern of the first functional layer 120 on the upper surface of the second base layer 140, a first adhesive layer 130 formed on the lower surface of the second base layer 140, a third base layer 170 comprising a third PET film, a third functional layer 180 having a micro-lens formed on the upper surface of the third base layer 170 or having scattering beads distributed on the upper surface of the third base layer 170, and a second adhesive layer 160 formed on the lower surface of the third base layer 170, wherein the ribs of the first prism pattern of the first functional layer 120 are partially embedded in the first adhesive layer 130 to integrate these with each other, and ribs of the second prism pattern of the second functional layer 150 are partially embedded in the second adhesive layer 160 to integrate these with each other.

As mentioned above, a first flat panel prism sheet comprising a first prism sheet and a PET film is prepared using a thin PET film, a UV resin, an adhesive and UV curing, a second flat panel prism sheet is formed on the first flat panel prism sheet using the UV resin, the adhesive and UV curing, and a lens sheet having a micro-lens pattern or a diffusion sheet having distributed scattering beads is formed on the upper surface of the second flat panel prism sheet using a UV resin and UV curing, thereby completing a three-layer composite sheet.

A conventional diffusion sheet which is directly positioned on the printless light guide plate cannot be attached to a prism sheet. Hence, instead of the above diffusion sheet, the first base layer comprising the PET film which is positioned directly on the printless light guide plate, and the prism pattern formed on the upper surface of the base layer are provided, thus forming the first prism sheet, and the prism ribs of the first prism sheet are adhered to the second base layer comprising the PET film, thereby manufacturing the first flat panel prism sheet. Furthermore, the second prism sheet having a prism pattern (in a direction orthogonal to the direction of the prism pattern of the first prism sheet) formed on the upper surface of the second base layer is provided, and the prism ribs of the second prism sheet are adhered to the third base layer comprising the third PET film, thereby manufacturing the second flat panel prism sheet. Briefly the first flat panel prism sheet is integrated with the second flat panel prism sheet. Moreover, the micro-lens pattern is formed on the upper surface of the third base layer corresponding to the upper surface of the second flat panel prism sheet, thus forming the third functional layer which is the lens sheet, consequently completing the three-layer composite sheet. Instead of the lens sheet, scattering beads are distributed on the upper surface of the third base layer thus forming a third functional layer which is the diffusion sheet. As such, the lower first prism sheet enables the obliquely directed light emitted from the printless light guide plate to travel to some extent in the perpendicular direction as in the diffusion sheet, and the second prism sheet functions to condense light so as to travel in a direction more proximate to the perpendicular direction. The micro-lens sheet has a light condensing function of about 80% of the prism sheet, as well as a diffusion function as does the diffusion sheet. Therefore, a single sheet of the three-layer composite sheet according to the present invention with or without a diffusion sheet positioned under the composite sheet is enough for the backlight unit using a printless light guide plate in LCD-TVs. Also in order to decrease the thickness of the three-layer composite sheet, lamination is carried out using thin PET films, thereby solving the problems of heat deformation and sheet wrinkle that occur in optical sheets using thick PET films due to the composite structure.

The thicknesses of the first PET film of the first base layer and of the second PET film of the second base layer may be selectively adopted in the range of 40 ∼ 60 µm, and the thickness of the third PET film of the third base layer may be selectively adopted in the range of 100 ∼ 140 µm. Preferably, the first PET film of the first base layer is 50 µm thick, the second PET film of the second base layer is 50 µm thick, and the third PET film of the third base layer is 125 µm thick.

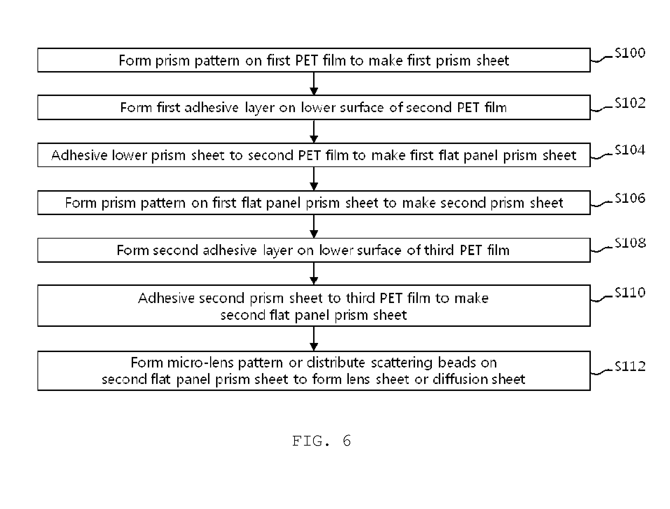

FIG. 6 is a flowchart illustrating a process of manufacturing the composite sheet for a backlight unit according to an embodiment of the present invention. As illustrated in FIG. 6, the method of manufacturing the composite sheet for a backlight unit according to the present invention comprises forming a first prism pattern using a UV resin on a first PET film and curing it using UV light thus making a first prism sheet (S100), thinly applying a UV resin on the lower surface of a second PET film thus forming a first adhesive layer (S102), partially embedding the ribs of the prism pattern of the first prism sheet in the first adhesive layer and performing curing using UV light thus making a first flat panel prism sheet (S104), forming a second prism pattern in a direction orthogonal to the direction of the first prism pattern using a UV resin on the upper surface of the first flat panel prism sheet and curing it using UV light thus making a second prism sheet (S106), thinly applying a UV resin on the lower surface of a third PET film thus forming a second adhesive layer (S108), partially embedding the ribs of the second prism pattern in the second adhesive layer and performing curing using UV light thus making a second flat panel prism sheet (S110), forming a micro-lens pattern using a UV resin on the upper surface of the second flat panel prism sheet thus forming a lens sheet or distributing scattering beads thereon and performing curing using UV light thus forming a diffusion sheet (S112).

In the method of manufacturing the composite sheet for a backlight unit according to the present invention, the UV resin is applied in a gel phase to a predetermined thickness on the upper surface of the first PET film which is thin, and the first prism pattern is formed on the upper surface of the first PET film using a prism pattern structure. The first PET film having the first prism pattern formed on the upper surface thereof is cured using UV light, thus manufacturing the first prism sheet. The first prism sheet is positioned directly on the printless light guide plate and thus performs the same function as does the diffusion sheet. Also, the UV resin is applied in a gel phase to a predetermined thickness on the lower surface of the second PET film which is thin, thus forming the first adhesive layer. Subsequently, the ribs of the first prism pattern of the first prism sheet are partially embedded in the first adhesive layer and then curing is performed using UV light, thus manufacturing the first flat panel prism sheet. Subsequently, the UV resin is applied in a gel phase to a predetermined thickness on the upper surface of the second PET film of the first flat panel prism sheet and the second prism pattern is formed on the upper surface of the second PET film using the prism pattern structure. The second prism pattern is in a direction orthogonal to the direction of the first prism pattern. The second PET film having the second prism pattern on the upper surface thereof is cured using UV light, thus manufacturing the second prism sheet. The second prism sheet functions to convert light, which is incident from the first prism sheet, into a perpendicular direction. Subsequently the UV resin is applied in a gel phase to a predetermined thickness on the lower surface of the third PET film which is thin, thus forming the second adhesive layer. The ribs of the second prism sheet are partially embedded in the second adhesive layer and then cured using UV light, thus manufacturing the second flat panel prism sheet. Subsequently, the UV resin is applied in a gel phase to a predetermined thickness on the upper surface of the second flat panel prism sheet, and the micro-lens pattern is formed using a micro-lens pattern structure. Subsequently, UV curing is performed, thereby manufacturing the composite sheet according to the present invention. Instead of the micro-lens pattern, scattering beads are distributed on the upper surface of the second flat panel prism sheet and then cured using UV light, thereby manufacturing the composite sheet according to the present invention. The composite sheet according to the present invention may be provided in the form of only the second flat panel prism sheet which is integrated with the first flat panel prism sheet. In this case, the third PET of the second flat panel prism sheet may play a role as a protective sheet.

Herebelow is provided a table illustrating the performance results of a variety of optical sheets including the composite sheet according to the present invention.

| | Protective Sheet Prism Sheet (Horizontal) Prism Sheet (Vertical) | Lens Sheet Lens Sheet | two-layer composite sheet | three-layer composite sheet Diffusion Sheet |
|---|---|---|---|---|
| Luminence (cd/m²) | 2,390 | 1,907 | 1,946 | 2,346 |
| x | 0.2521 | 0.2520 | 0.2508 | 0.2535 |
| Y | 0.2273 | 0.2251 | 0.2245 | 0.2277 |
| Luminance (Relative Ratio) | 125.34 | 100.0% | 102.0% | 123.0% |
| Thickness | 1,130µm | 600µm | 260µm | 520µm |

| | | | | |
|---|---|---|---|---|
| Measurement; 32" 1H LED BLU | | | | |

The embodiments as described above correspond to some of the variety of embodiments of the present invention. The composite sheet for a backlight unit using the printless light guide plate in LCD-TVs, specifically, the composite sheet comprising the first prism sheet which performs the function of a diffusion sheet, the second prism sheet integrated with the upper surface of the first prism sheet in a direction orthogonal to the first prism sheet to perform a light condensing function, and a protective sheet or a lens sheet integrated with the upper surface of the second prism sheet, and the method of manufacturing the same may be variously embodied, which is naturally incorporated into the spirit and scope of the present invention.

## Claims

1. A composite sheet for a backlight unit using a printless light guide plate in a liquid crystal display television, comprising:
a first prism sheet positioned directly on the printless light guide plate;
a second prism sheet having a prism pattern formed in a direction orthogonal to a direction of a prism pattern of the first prism sheet; and
a protective sheet,
wherein ribs of the first prism sheet are adhered to a lower surface of the second prism sheet, and ribs of the second prism sheet are adhered to a lower surface of the protective sheet.

2. The composite sheet of claim 1, wherein the first prism sheet comprises a first base layer comprising an optical film, and a first functional layer having the prism pattern formed on an upper surface of the first base layer, the optical film being a polyethyleneterephthalate (PET) film.

3. The composite sheet of claim 2, wherein the second prism sheet comprises a second base layer comprising an optical film, and a second functional layer having the prism pattern formed on an upper surface of the second base layer, the optical film being a PET film.

4. The composite sheet of claim 1, wherein the protective sheet is a PET film.

5. The composite sheet of claim 4, wherein a micro-lens pattern is formed on an upper surface of the protective sheet.

6. The composite sheet of claim 4, wherein scattering beads are distributed on an upper surface of the protective sheet.

7. A composite sheet for a backlight unit using a printless light guide plate in a liquid crystal display television, comprising:
a first flat panel prism sheet comprising a first base layer comprising a first PET film which is positioned directly on the printless light guide plate, a first functional layer having a prism pattern formed on the first base layer, and a second base layer comprising a second PET film a lower surface of which is adhered to ribs of the prism pattern of the first functional layer; and
a second flat panel prism sheet comprising a second functional layer formed on an upper surface of the second base layer and having a prism pattern formed in a direction orthogonal to a direction of the prism pattern of the first functional layer, and a third base layer comprising a third PET film a lower surface of which is adhered to ribs of the prism pattern of the second functional layer.

8. The composite sheet of claim 7, further comprising a third functional layer having a micro-lens pattern formed on an upper surface of the third base layer.

9. The composite sheet of claim 7, further comprising a third functional layer having scattering beads distributed on an upper surface of the third base layer.

10. A composite sheet for a backlight unit using a printless light guide plate in a liquid crystal display television, comprising:
a first base layer comprising a first PET film which is positioned directly on the printless light guide plate, a first functional layer having a first prism pattern formed on an upper surface of the first base layer, a second base layer comprising a second PET film, a second functional layer having a second prism pattern formed in a direction orthogonal to a direction of the first prism pattern of the first functional layer on an upper surface of the second base layer, a first adhesive layer formed on a lower surface of the second base layer, a third base layer comprising a third PET film, a third functional layer having a micro-lens formed on an upper surface of the third base layer or having scattering beads distributed on the upper surface of the third base layer, and a second adhesive layer formed on a lower surface of the third base layer,
wherein ribs of the first prism pattern of the first functional layer are partially embedded in the first adhesive layer to integrate the layers with each other, and ribs of the second prism pattern of the second functional layer are partially embedded in the second adhesive layer to integrate the layers with each other.

11. A method of manufacturing a composite sheet for a backlight unit using a printless light guide plate in a liquid crystal display television, comprising:
forming a first prism pattern on an upper surface of a first PET film, thus manufacturing a first prism sheet which directly receives light from the printless light guide plate;
adhering prism ribs of the first prism sheet to a lower surface of a second PET film, thus manufacturing a first flat panel prism sheet;
forming a second prism pattern in a direction orthogonal to a direction of the first prism pattern on an upper surface of the second PET film, thus manufacturing a second prism sheet; and
adhering prism ribs of the second prism sheet to a lower surface of a third PET film, thus manufacturing a second flat panel prism sheet.

12. A method of manufacturing a composite sheet for a backlight unit, comprising:
forming a first prism pattern using a UV resin on a first PET film and curing it using UV light, thus manufacturing a first prism sheet;
thinly applying a UV resin on a lower surface of a second PET film, thus forming a first adhesive layer;
partially embedding ribs of the prism pattern of the first prism sheet in the first adhesive layer and performing curing using UV light, thus manufacturing a first flat panel prism sheet;
forming a second prism pattern in a direction orthogonal to a direction of the first prism pattern using a UV resin on an upper surface of the first flat panel prism sheet and curing it using UV light, thus manufacturing a second prism sheet;
thinly applying a UV resin on a lower surface of a third PET film, thus forming a second adhesive layer; and
partially embedding ribs of the second prism pattern in the second adhesive layer and performing curing using UV light, thus manufacturing a second flat panel prism sheet.

13. A method of manufacturing a composite sheet for a backlight unit using a printless light guide plate in a liquid crystal display television, comprising:
preparing a first base layer comprising a first PET film which is positioned directly on the printless light guide plate;
forming a first functional layer having a first prism pattern on an upper surface of the first base layer;
preparing a second base layer comprising a second PET film;
forming a first adhesive layer on a lower surface of the second base layer;
partially embedding prism ribs of the first functional layer in the first adhesive layer so as to be adhered thereto, thus manufacturing a first flat panel prism sheet;
forming a second functional layer having a second prism pattern formed in a direction orthogonal to a direction of the first prism pattern of the first functional layer on an upper surface of the second base layer;
preparing a third base layer comprising a third PET film;
forming a second adhesive layer on a lower surface of the third base layer; and
partially embedding prism ribs of the second functional layer in the second adhesive layer so as to be adhered thereto, thus manufacturing a second flat panel prism sheet.

14. The method of any one of claims 11 to 13, further comprising forming a micro-lens pattern on an upper surface of the second flat panel prism sheet.

15. The method of any one of claims 11 to 13, further comprising distributing scattering beads on an upper surface of the second flat panel prism sheet.
